# EUROPEAN PATENT SPECIFICATION

(11) **EP 1 974 445 B1**
(45) Date of publication and mention of the grant of the patent: **19.03.2014**
(21) Application number: 05796169.0
(22) Date of filing: 08.09.2005
(51) Int. Cl.: H02H 5/00

(54) **RADIATION TOLERANT DC/DC CONVERTER WITH NON-RADIATION HARDENED PARTS**
STRAHLUNGSTOLERANTER DC/DC-WANDLER MIT NICHTSTRAHLUNGSGEHÄRTETEN TEILEN
CONVERTISSEUR CONTINU-CONTINU TOLERANT AU RAYONNEMENT AVEC DES PARTIES NON ENDURCIES PAR RAYONNEMENT

(43) Date of publication of application: 01.10.2008
(73) Proprietor: Summer, Steven E., Shirley NY 11967 (US)
(72) Inventor: Summer, Steven E., Shirley NY 11967 (US)
(74) Representative: Graf Glück Kritzenberger
(86) International application number: PCT/US2005/032458
(87) International publication number: WO 2007/030120

(56) References cited:
- WO-A1-02/05348
- WO-A1-02/078161
- WO-A1-03/088463
- WO-A2-2006/055298
- US-A- 4 109 163
- US-A- 4 415 963
- US-A- 4 881 023
- US-A- 5 661 642
- US-A1- 2005 207 186
- US-A1- 2006 049 864
- US-B1- 6 411 068
- US-B1- 6 509 589
- US-B2- 6 982 883
- US-B2- 7 135 846

## Description

### THE FIELD OF THE INVENTION

The present invention generally relates to power supplies, and more particularly to a radiation tolerant, self-oscillating switching regulator with hysteretic voltage control to convert a DC input voltage to an intermediate DC output voltage.

### BACKGROUND OF THE INVENTION

Switching regulators typically provide near-constant voltage levels to voltage-sensitive devices. An example regulator includes a switch, an inductance-capacitance (LC) output filter to smooth the output, a feedback circuit, a comparator, and a control circuit. The control circuit selectively turns the switch on and off as necessary, based on a sample of a function of the output received by the comparator via the feedback circuit, to maintain the output voltage within a desired range.

Various types of switching regulators have been developed. One example includes a fixed frequency pulse width modulating (PWM) integrated circuit with a gate drive circuit and a derived voltage source for powering circuit components. The fixed frequency PWM circuit switches continuously, regardless of whether switching is necessary. Accordingly, the fixed frequency PWM circuit continuously generates undesirable electromagnetic interference and switching power losses. Conventional switching regulators typically require an additional regulator circuit to create a low voltage supply for the comparator to operate over a wide voltage range, resulting in an increased number of components and a corresponding increase in size, weight, and cost. Additionally, conventional switching regulators typically are not radiation hardened.

Many systems, particularly those in spacecraft, would benefit from a switching regulator that requires less space, operates reliably over a wide range of input voltages without the requirement of a separate regulator circuit to serve as a power supply, and has superior radiation tolerance.

US Patent US 6,411, 068 B1 discloses a switching regulator connectable to a DC power supply which includes a power switch coupled between a first node and an output node and having a control gate. An output voltage feedback circuit is coupled between the output node and a feedback node. A self-oscillating power switch control circuit is coupled to the first node, the feedback node, and the power switch control gate. The power switch control circuit compares a feedback voltage to a reference voltage and provides a first control voltage to the power switch control gate when the reference voltage exceeds the feedback voltage to turn on the power switch to raise the output voltage, and a second control voltage to the power switch control gate when the feedback voltage exceeds the reference voltage to turn off the power switch to lower the output voltage.

US Patent US 5,661,642 A discloses a switching power supply comprising a pulse-width modulation control circuit which is connected to a switching element and a photo-detection part of a photo coupler.

Document US 4,109,163 discloses a voltage level shift circuit which can be used as a memory buffer circuit.

Document WO 02/05348 A1 discloses CMOS devices hardened against total dose radiation effects.

Document US 6,509,589 B1 discloses a compensation circuit for compensation the threshold shift in an irradiated MOSFET.

Document WO 02/078161 A1 discloses a switching power supply comprising a power transformer and an pulse-width modulation control circuit to regulate the output current.

Document WO 03/088463 A1 discloses a green switch power supply with a standby function.

### Summary of the Invention

A radiation tolerant high-power DC/DC converter is disclosed as recited in claim 1. The converter does not incorporate radiation-hardened parts, but instead uses p-channel FET switches that have a negative gate threshold voltage. With exposure to radiation, the gate threshold voltage decreases, becoming more negative. Thus, the gate is still controllable.

Accommodation is made for n-channel FETs as well. A negative gate drive signal is provided to conventional n-channel FETs, so that even if they have been irradiated, they are still controllable despite the fact their gate threshold voltage has dropped below zero volts.

In further detail, the present invention provides a high-power DC/DC converter with a p-channel FET DC/DC Converter, a PMW circuit, an enable circuit, a DC restorer, a p-channel FET switch, an upper-n-channel FET, a lower-n-channel FET, a power transformer, an upper-catch diode, a lower-catch diode, a rectifter, a filter, and a feedback isolator. The p-channel FET DC/DC converter is operably connected to a voltage source; the PMW circuit is operably connected to the p-channel FET DC/DC converter; the enable circuit is operably connected to the p-channel FET DC/DC converter; the DC restorer is operably connected to the PMW circuit, the p-channel FET switch is operably connected to the voltage source; the upper-n-channel FET is operably connected to the p-channel FET switch; lower-n-channel FET is operably connected to the PMW circuit; the power transformer is operably connected to the upper and lower-n-channel switching FET; the upper and lower-catch diodes are operably connected to the power transformer; the rectifier is operably connected to the power transformer; the filter is operably connected to the rectifier; the feedback isolator is operably connected to the filter and PWM circuit.

### Brief Description of the Drawings

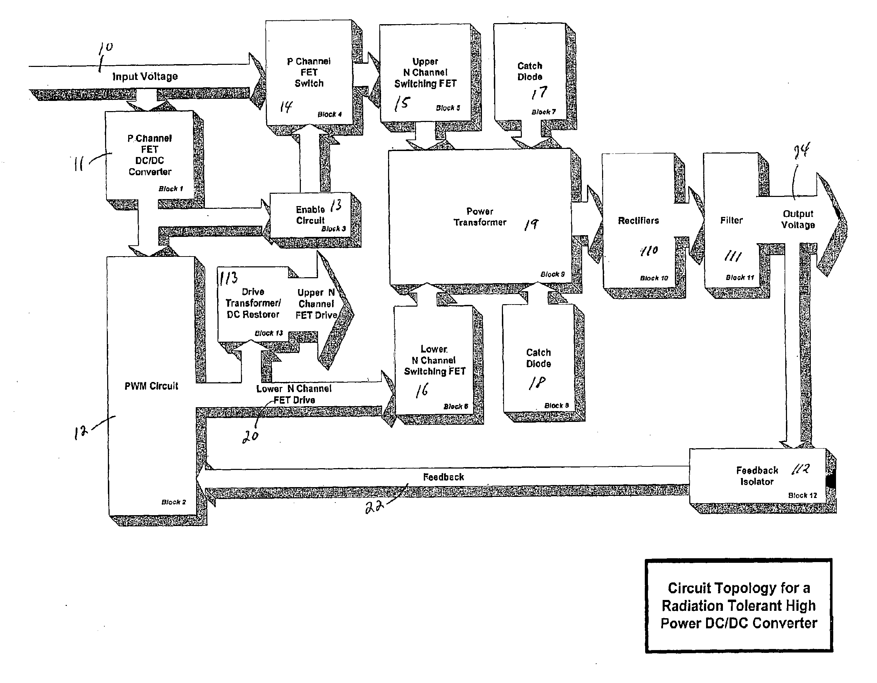

Figure 1 is a block diagram of a circuit according to an embodiment of the present invention.

### Detailed Description

Field-effect transistors exist in two major classifications, the junction FET (JFET) and the metal-oxide- semiconductor FET (MOSFET). A MOSFET is a special type of FET that works by electronically varying the width of a channel along which charge carriers (electrons or holes) flow. Wider channels provide better conductivity. The charge carriers enter the channel at the source, and exit via the drain. The width of the channel is controlled by the voltage on an electrode called the gate, which is located physically between the source and the drain and is insulated from the channel by an extremely thin layer of metal oxide.

There are two ways in which a MOSFET can function. The first is known as depletion mode. When there is no voltage on the gate, the channel exhibits its maximum conductance. As the voltage on the gate increases (either positively or negatively, depending on whether the channel is made of P-type or N-type semiconductor material), the channel conductivity decreases. The second mode of MOSFET operation is called enhancement mode. When there is no voltage on the gate, there is in effect no channel, and the device does not conduct. A channel is produced by the application of a voltage to the gate. Increasing gate voltage increases conductivity and thus, current flow.

The MOSFET has certain advantages over the conventional junction FET, or JFET because the gate is insulated electrically from the channel. No current flows between the gate and the channel, regardless of the gate voltage (as long as it does not become so great that it causes physical breakdown of the metallic oxide layer). Thus, the MOSFET has practically infinite impedance.

In this type of application, namely a DC/DC power converter, the salient characteristics of the semiconductor switch are its off voltage withstanding capability (the drain to source voltage) and its on resistance (which should be as low as possible). MOSFETS are used over JFETS because MOSFETS have much better drain to source voltage and on resistance characteristics.

When conventional non-radiation hardened N Channels FETs are used in applications where radiation is present, the FETs become uncontrollable at relatively low radiation levels because the gate threshold voltage of the N channel FET experiences a negative shift, and ultimately falls close to zero. At that point, the N channel FET conducts current with little or no gate voltage applied making it uncontrollable, like a flood gate that cannot be closed.

The gate threshold voltage of a conventional, non-radiation hardened P channel FET also shifts negatively with radiation exposure. However, the initial threshold voltage of an ordinary P channel FET is negative to begin with. In the presence of radiation, therefore, the gate threshold voltage does not approach zero and therefore will not become uncontrollable. The gate threshold voltage does change, but from a negative value to a more negative value. Conventional P channel FETs, therefore, are more robust to total radiation dose effects as compared to conventional N channel FETs when the proper gate drive signal is provided.

In accordance with an embodiment of the present invention, the gate drive signal should be high enough to saturate the drain to source channel. It should not, however, be so high that the gate to source breakdown voltage rating of the FET is exceeded. Preferably, the FET operates close to its maximum gate voltage signal. Higher signals can handle higher radiation levels, allowing the FET to function across a larger range of radiation exposure. For n-channel FETs, a negative gate bias should be implemented in the "off" mode. The negative bias will overcome the effect of trapped charges within the gate oxide and allow the n-channel FET to switch on and off despite negative shifts in the gate threshold voltage.

Figure 1 shows the circuit topology for a radiation tolerant high power DC/DC converter according to an embodiment of the present invention. The main power stage shown in the block diagram is a two transistor forward converter. The main converter, however, may be any suitable hard switched or resonant topology using N channel FETs.

In use, input line or voltage 10 is applied to two circuit blocks using P channel FETs. The first block is a relatively low power DC/DC converter 11 that generates a bias voltage for the PWM circuit 12. Preferably, the output voltage of the converter 11 is 15 volts total, split to produce positive 12 VDC and negative 5 VDC. The converter 11 generates a negative bias level, so that conventional N channel FETs that have been irradiated may, nevertheless, be controlled, despite the fact their gate threshold voltage has dropped below zero volts.

A pulse width modulator (PWM) circuit 12 generates a pulse with modulated drive signal depending on the feedback voltage 22 from the main output. The pulse width output 20 drives the lower leg FET 16 and the upper leg FET 15 simultaneously. However, the lower FET drive 20 is direct coupled, while the upper leg FET 15 is driven through a transformer and DC restorer circuit 113. The DC restorer circuit 1 13 preferably contains a blocking capacitor, diode and zener diode.

The off and on voltage levels for the lower FET 16 gate are approximately -5 VDC and + 10 VDC respectively. The gate voltage levels for the upper FET 15 are similar, due to clamping of the DC restorer circuit 113.

The input voltage 10 is also applied to a p-channel FET switch 14, which is an on/off switching stage that functions as a solid state relay. This solid state relay function is constructed using P channel FETs as the active element. Although the gate to source threshold value of the P channel FETs varies with total ionizing dose, no conduction ever occurs at zero gate to source voltage, regardless of total ionizing dose. Therefore, the function of these P channel FETs is "normally off". In an application such as a sold state relay, P channel FETs may be readily combined in series or parallel configurations to increase their overall cumulative ratings, since the switching action is performed at low switching speeds.

The P channel FET switch 14 is kept in the "off" state by the enable circuit 13 until the negative bias voltage derived by the converter 11 stabilizes at its desired negative voltage. When this condition is reached, the switch 14 is enabled and input voltage is applied to the upper N channel switching FET 15.

The main DC-DC converter power stage shown in this particular embodiment is preferably the two-transistor-forward-converter type. However, the topology of the main DC-DC converter may alternately be a flyback, single ended forward, half bridge, full bridge or any resonant variety of these types.

Describing the operation of the two-transistor-forward-converter type, an upper 15 and lower 16 N channel FET are connected in series with a power transformer 19 primary winding. The upper 15 and lower 16 FETs are fed from a controllable source of power as supplied from the P channel FET switch 14.

An upper catch diode 17 and a lower catch diode 18 in the upper and lower legs clamp the power transformer 19 primary across the input power line. This forces a limited reset voltage across the transformer 19 primary and limits the voltage stress on the upper 15 and lower 16 N channel FETs to approximately the input voltage.

The secondary winding of the transformer 19 is connected to an output rectifier 110. The rectifier 110 includes series and shunt diodes, smoothed by a filter 111. The output of the smoothing filter 111 feeds the load 24 of the circuit.

A sample of the output voltage is isolated by a feedback isolator 112 and fed back to the PWM (pulse width modulator) circuit 12. The PWM circuit 12 adjusts the pulse width of the gate drive for the upper 15 and lower 16 N channel FETs to produce the desired output voltage.

As mentioned previously, the lower 16 and upper 15 N channel FETs are driven simultaneously in the two-transistor-forward converter topology of the preferred embodiment discussed above. The lower 16 N channel FET is driven directly by the PWM circuit 12.

The source voltage of the lower N channel FET 16 should be about the power input return potential. Since the PWM circuit 12 is biased approximately five volts below the input ground level, the gate to source drive signal for the lower 16 N channel FET swings from approximately negative 4 VDC to positive 8 VDC.

In accordance with the principles of the present invention, a negative gate drive signal allows even conventional n-channel FETs to function properly, despite being irradiated. IN other words, because of the negative gate drive signal level, conventional n-channel FETs that have been irradiated may, nevertheless, be properly controlled, despite the fact their gate threshold voltage has dropped below zero volts.

In further detail, the drive signal for the upper N channel FET 15 is AC coupled through the transformer 19. On the secondary side of the transformer 19, the secondary winding is connected to a blocking capacitor in series and a series connected zener diode and conventional diode in shunt. This circuit acts as a DC restorer, however the low level of the gate drive waveform is several volts more negative than zero, reference to the N channel FET's source terminal. The extent of the negative gate voltage is determined by the magnitude of the zener diode voltage.

By extension, this same technique can be used for radiation hardened Motor Drives.

## Claims

1. A radiation tolerant DC/DC converter for providing controlled electrical response in radiation-intensive applications, the DC/DC converter comprising:
- a non-hardened p-channel FET (11, 14) supplying input voltage (10) to a non-hardened n-channel FET (15, 16) with a negative bias to provide a controlled electrical output (24) from the n-channel FET (15, 16), further comprising:
- a pulse width modulator (PMW) circuit (12) operably connected between the non-hardened p-channel FET (11) and the non-hardened n-channel FET (16),
- a feedback isolator (112) operably connected between the pulse width modulator (PMW) circuit (12) and the electrical output (24),
- an enable circuit (13) operably connected between the non-hardened p-channel FET (11) and the non-hardened n- channel FET (15),
- a power transformer (19) operably connected between the non-hardened n-channel FET (15, 16) and the electrical output (24) and
- a rectifier (110) operably connected between the power transformer (19) and the electrical output (24).

2. The DC/DC converter of claim 1 wherein the non-hardened p-channel FET (11) is a p-channel FET DC/DC Converter.

3. The DC/DC converter of claim 1 further comprising a filter (111) operably connected between the rectifier (110) and the electrical output (24).

4. The DC/DC converter of claim 1 wherein the power transformer (19) is two-transistor-forward.

5. The DC/DC converter of claim 1 wherein the power transformer (19) is a flyback transformer.

6. The DC/DC converter of claim 1 wherein the power transformer (19) is single-ended- forward.

7. The DC/DC converter of claim 1 wherein the power transformer (19) is half-bridged.

8. The DC/DC converter of claim 1 wherein the power transformer (19) is full-bridged.

9. The DC/DC converter of claim 1 wherein the power transformer (19) is resonant two- transistor-forward.

10. The DC/DC converter of claim 1 wherein the power transformer (19) is a resonant flyback transformer.

11. The DC/DC converter of claim 1 wherein the power transformer (19) is resonant single-ended-forward.

12. The DC/DC converter of claim 1 wherein the power transformer (19) is resonant half- bridged.

13. The DC/DC converter of claim 1 wherein the power transformer (19) is resonant full- bridged.

14. The DC/DC converter of claim 1 wherein the DC/DC converter is a high-power-DC/DC converter.

## Patentansprüche

1. Strahlungstoleranter Gleichstromwandler zur Bereitstellung einer gesteuerten elektrischen Reaktion bei strahlungsintensiven Anwendungen, wobei der Gleichstromwandler aufweist:
- einen nicht gehärteten p-Kanal-FET (11, 14), der einem nicht gehärteten n-Kanal-FET (15, 16) eine Eingangsspannung (10) mit einer negativen Vorspannung zuführt, um einen gesteuerten elektrischen Ausgang (24) aus dem n-Kanal-FET (15, 16) bereitzustellen, ferner mit:
- einer Pulsbreitenmodulator(PMW)-Schaltung (12), die betriebsbereit zwischen dem nicht gehärteten p-Kanal-FET (11) und dem nicht gehärteten n-Kanal-FET (16) geschaltet ist,
- einem Rückkopplungsisolator (112), der betriebsbereit zwischen der Pulsbreitenmodulator(PMW)-Schaltung (12) und dem elektrischen Ausgang (24) geschaltet ist,
- einer Aktivierungsschaltung (13), die betriebsbereit zwischen dem nicht gehärteten p-Kanal-FET (11) und dem nicht gehärteten n-Kanal-FET (15) geschaltet ist,
- einem Leistungstransformator (19), der betriebsbereit zwischen dem nicht gehärteten n-Kanal-FET (15, 16) und dem elektrischen Ausgang (24) geschaltet ist, und
- einem Gleichrichter (110), der betriebsbereit zwischen dem Leistungstransformator (19) und dem elektrischen Ausgang (24) geschaltet ist.

2. Gleichstromwandler nach Anspruch 1, wobei der nicht gehärtete p-Kanal-FET (11) ein p-Kanal-FET-Gleichstromwandler ist.

3. Gleichstromwandler nach Anspruch 1, ferner mit einem Filter (111), das betriebsbereit zwischen dem Gleichrichter (110) und dem elektrischen Ausgang (24) geschaltet ist.

4. Gleichstromwandler nach Anspruch 1, wobei der Leistungstransformator (19) vom Zweitransistordurchflusstyp ist.

5. Gleichstromwandler nach Anspruch 1, wobei der Leistungstransformator (19) ein Rücklauftransformator ist.

6. Gleichstromwandler nach Anspruch 1, wobei der Leistungstransformator (19) vom Eintaktdurchflusstyp ist.

7. Gleichstromwandler nach Anspruch 1, wobei der Leistungstransformator (19) vom Halbbrückentyp ist.

8. Gleichstromwandler nach Anspruch 1, wobei der Leistungstransformator (19) vom Vollbrückentyp ist.

9. Gleichstromwandler nach Anspruch 1, wobei der Leistungstransformator (19) vom resonanten Zweitransistordurchflusstyp ist.

10. Gleichstromwandler nach Anspruch 1, wobei der Leistungstransformator (19) ein resonanter Rücklauftransformator ist.

11. Gleichstromwandler nach Anspruch 1, wobei der Leistungstransformator (19) vom Eintaktdurchflusstyp ist.

12. Gleichstromwandler nach Anspruch 1, wobei der Leistungstransformator (19) vom resonanten Halbbrückentyp ist.

13. Gleichstromwandler nach Anspruch 1, wobei der Leistungstransformator (19) vom resonanten Vollbrückentyp ist.

14. Gleichstromwandler nach Anspruch 1, wobei der Gleichstromwandler ein Hochleistungs-Gleichstromwandler ist.

## Revendications

1. Convertisseur CC/CC tolérant aux rayonnements pour fournir une réponse électrique régulée dans des applications intensives en rayonnements, le convertisseur CC/CC comprenant :
- un FET à canal p non durci (11, 14) fournissant une tension d'entrée (10) à un FET à canal n non durci (15, 16) avec une polarisation négative pour fournir une sortie électrique régulée (24) à partir du FET à canal n (15, 16), comprenant en outre :
- un circuit de modulateur de largeur d'impulsion (PWM) (12) relié, de manière à pouvoir fonctionner, entre le FET à canal p non durci (11) et le FET à canal n non durci (16),
- un isolateur de rétroaction (112) relié, de manière à pouvoir fonctionner, entre le circuit de modulateur de largeur d'impulsion (PWM) (12) et la sortie électrique (24),
- un circuit d'activation (13) relié, de manière à pouvoir fonctionner, entre le FET à canal p non durci (11) et le FET à canal n non durci (15),
- un transformateur de puissance (19) relié, de manière à pouvoir fonctionner, entre le FET à canal n non durci (15, 16) et la sortie électrique (24), et
- un redresseur (110) relié, de manière à pouvoir fonctionner, entre le transformateur de puissance (19) et la sortie électrique (24).

2. Convertisseur CC/CC selon la revendication 1, dans lequel le FET à canal p non durci (11) est un convertisseur CC/CC de FET à canal p.

3. Convertisseur CC/CC selon la revendication 1, comprenant en outre un filtre (111) relié, de manière à pouvoir fonctionner, entre le redresseur (110) et la sortie électrique (24).

4. Convertisseur CC/CC selon la revendication 1, dans lequel le transformateur de puissance (19) est une voie directe à deux transistors.

5. Convertisseur CC/CC selon la revendication 1, dans lequel le transformateur de puissance (19) est un transformateur de retour.

6. Convertisseur CC/CC selon la revendication 1, dans lequel le transformateur de puissance (19) est une voie directe à une seule extrémité.

7. Convertisseur CC/CC selon la revendication 1, dans lequel le transformateur de puissance (19) est à demi-pont.

8. Convertisseur CC/CC selon la revendication 1, dans lequel le transformateur de puissance (19) est à pont complet.

9. Convertisseur CC/CC selon la revendication 1, dans lequel le transformateur de puissance (19) est une voie directe résonnante à deux transistors.

10. Convertisseur CC/CC selon la revendication 1, dans lequel le transformateur de puissance (19) est un transformateur de retour résonnant.

11. Convertisseur CC/CC selon la revendication 1, dans lequel le transformateur de puissance (19) est une voie directe à une seule extrémité résonnante.

12. Convertisseur CC/CC selon la revendication 1, dans lequel le transformateur de puissance (19) est à demi-pont résonnant.

13. Convertisseur CC/CC selon la revendication 1, dans lequel le transformateur de puissance (19) est à pont complet résonnant.

14. Convertisseur CC/CC selon la revendication 1, dans lequel le convertisseur CC/CC est un convertisseur CC/CC de grande puissance.
